# EUROPEAN PATENT SPECIFICATION

(11) **EP 1 531 092 B1**
(45) Date of publication and mention of the grant of the patent: **27.08.2008**
(21) Application number: 04105434.7
(22) Date of filing: 01.11.2004
(51) Int. Cl.: B60R 19/40

(54) **Fender device**
Stossfängervorrichtung
Dispositif d'amortisseur

(30) Priority: 11.11.2003 NL 1024762
(43) Date of publication of application: 18.05.2005
(73) Proprietor: Machinefabriek van Hoek B.V., 5624 MD Eindhoven (NL)
(72) Inventor: Van de Laak, Thomas Marinus Antonius, 5684 JN Best (NL)
(74) Representative: Smeets, Eugenius Theodorus J. M.

(56) References cited:
- EP-A- 0 589 227
- DE-A- 4 337 263
- DE-B- 1 239 581
- US-A- 1 445 655

## Description

The invention relates to a fender device for a motor vehicle with a chassis provided with wheels and comprising a frame that has a beam that can be fastened to said chassis and a fender beam running parallel to said beam and fastened to said beam by means of two profiles, such that an end of each profile is hinged to the fender beam and the other end of each profile is hinged to the beam, each profile comprising two profile parts that are interconnected with hinging possibility, so that the fender beam is displaceable from a first position located close to the beam, with the profile parts lying against each other, and a second position farther removed from the beam, with the profile parts lying in one another's extended direction, and vice versa.

Such a fender device is known from German patent DE 43 37 263 published on May 18^{th}, 1995. A fender device for a motor car is described therein which consists of a beam and a fender beam which can be moved away from and towards one another by means of two profiles that constitute a hinge and that are hinged to the two beams. It is envisaged that the two beams are kept close together under normal conditions by means of a locking device, and that said locking device is unlocked in the case of sudden and forceful braking, whereby the beams are pressed apart by springs. It is possible in this manner to alleviate the effects of another car hitting the car from behind. A shock absorber mounted between the hinging profiles has a further favorable effect here.

The inventor has realized that such a construction may also be used to advantage as a so-termed "under-run" safeguard in heavy motor vehicles such as trucks, tractors, and delivery vans, and in particular in a so-termed container truck. A deliberate choice is then made between the two possible relative positions of the beams in dependence on the (longitudinal) dimension of the container to be loaded. The frame need not be resilient in this case.

A disadvantage of the known fender device is that it is not completely safe when used as an under-run safeguard, in particular in the situation in which the fender beam is at a distance from the beam. In this situation, in fact, a smaller vehicle such as a bicycle or a moped, or even a pedestrian, could accidentally come between the beam and the fender beam and be injured as a result. This risk is even greater when the motor vehicle is moving with the fender device in the extended state.

It is an object of the present invention, therefore, to provide a fender device of the kind mentioned in the opening paragraph which does not have the above disadvantage, or at least to a much lesser degree, and which is excellently suitable for use as an under-run safeguard of in particular heavy motor vehicles.

According to the invention, a fender device of the kind mentioned in the opening paragraph is for this purpose characterized in that the profiles are fastened to the beam and to the fender beam adjacent the ends thereof, the hinging connection between the profile parts being shaped such that the hinge points of the profile parts can only be located between said ends in each and every relative position of the fender beam with respect to the beam, and in that the frame is provided with reinforcement means between the ends of the beam and the fender beam whereby in the second position a rigid connection can be created between the beam and the fender beam. Since the profiles are fastened to the ends of the beam and the fender, the frame in its second position forms as it were a closed rectangle whereby the sideways entry of a bicycle, moped, or pedestrian between the beam and the fender beam is made much more unlikely, if not impossible. The hinging profiles can now only hinge inwards - unlike in the known device - so the fender device according to the invention has the same length in both positions and there are no projecting parts than could pose a danger. The presence of reinforcement means between the beam and the fender beam in the area of the ends thereof prevents an undesirable weakening of the entire frame that could arise owing to the displacement of the hinges to the outer ends of the beam and the fender beam. As a result, the fender device according to the invention forms an excellent under-run safeguard in all directions and at the same time has a sufficient strength in all directions.

The reinforcement means may comprise, for example, one or several parts that can be pivoted outwards from the beam, i.e. pivoted from the beam in the second position and applied against the fender beam.

In a preferred embodiment of a fender device according to the invention, the reinforcement means comprise two further profiles of a construction similar to that of the profiles, which further profiles are fastened between the ends and the centers of the beam and the fender beam to said beams in the same manner as the profiles. A sturdy fender device is created in this manner which is readily collapsible and extendible thanks to its constructional symmetry.

Preferably, the profiles and the further profiles are interconnected adjacent the hinge points of their profile parts by means of a coupling piece that is fastened with rotation possibility to the profiles and the further profiles. It is made possible thereby that the entire frame can be smoothly folded in or out in that only, for example, the further profile parts are actuated. The bridge part may advantageously fastened to hinge pins between the profile parts of the profiles and the further profiles. In an attractive modification the coupling piece is fastened to the profile parts and the further profiles in a position between the hinge pins and the fender beam. This construction is simple and cheap and effective. The coupling piece is preferably provided with recesses for accommodating the profile parts of the further profiles in the first position of the fender beam. The fender device can be compact as a result of this.

In a particularly attractive embodiment, the further profiles are connected to displacement means which are accommodated in the beam, which can be coupled to the chassis, which comprise a pneumatic or hydraulic drive, and which are hinged to the further profiles. Since a pneumatic or hydraulic mechanism can be readily incorporated in the chassis of the motor vehicle, or is indeed already present therein, the inward and outward movement of the frame can be easily automated in this manner, and no physical manpower will be needed for this operation.

In a favorable modification, the shape and dimensions and the materials of the profiles and further profiles are chosen such that the force-absorbing capacity of the further profiles is greater than that of the profiles. This is advantageous because normally the greatest forces are exerted on the frame by a (heavy) motor vehicle coming from the rear.

As was discussed above, the hinge between the profile parts is constructed such that said parts can only hinge inwards and cannot bend further outwards in the second position. This is achieved, for example, in that the ends of the profile parts lying against each other are made planar, and the hinge is provided at the visible side of the profiles. Preferably, the frame is provided with locking means by which the further profiles can be locked in the extended state. It is prevented thereby that the frame - once extended - can be collapsed again in the case of a collision. The locking means may comprise, for example, a pin provided in the frame, which pin can be passed through two corresponding holes in two mutually overlapping parts of two profiles, with the frame in the extended state, and can be locked in this position by means of a split pin.

Most of the components of the frame, such as the beam, the further beam, and the profiles / profile parts, are preferably formed as U-profiles. This provides a sufficient strength as well as an easy construction and operation of the frame. The coupling parts are preferably shaped as H-profiles for the same reason. The dimensions of a fender device according to the invention are preferably adapted to fit a heavy motor vehicle such as a truck, tractor, or delivery van.

The invention finally also relates to a motor vehicle provided with a fender device according to the invention.

These and further properties, aspects, and advantages of the invention will be discussed in more detail below with reference to preferred embodiments of the invention and in particular with reference to the appended Figures, in which:
Figs. 1 to 3 are plan views of a motor vehicle provided with a fender device according to the invention in consecutive stages of the process of extending the fender device,
Fig. 4 is a side elevation of the motor vehicle in the stage corresponding to Fig. 3,
Fig. 5 is a perspective view of a first embodiment of a fender device according to the invention in the extended state, and
Fig. 6 is a perspective view of a second embodiment of a fender device according to the invention in the extended state.

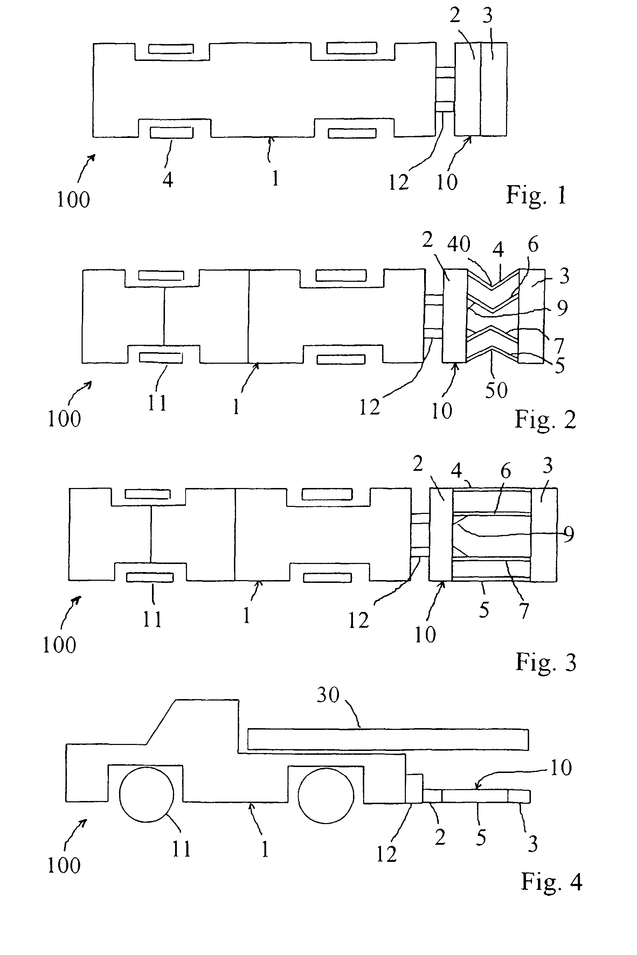

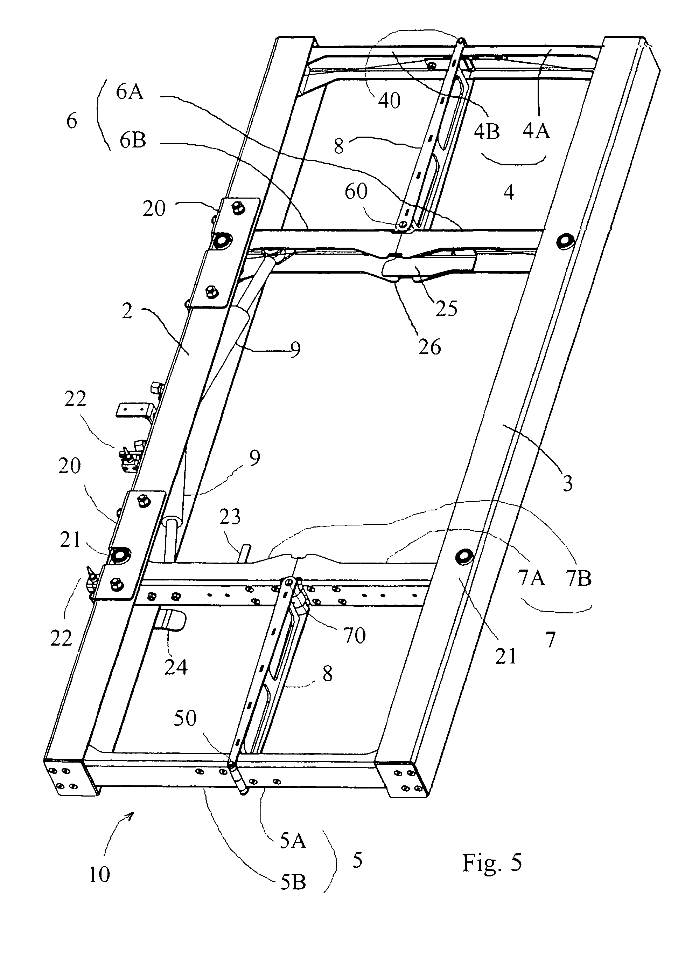

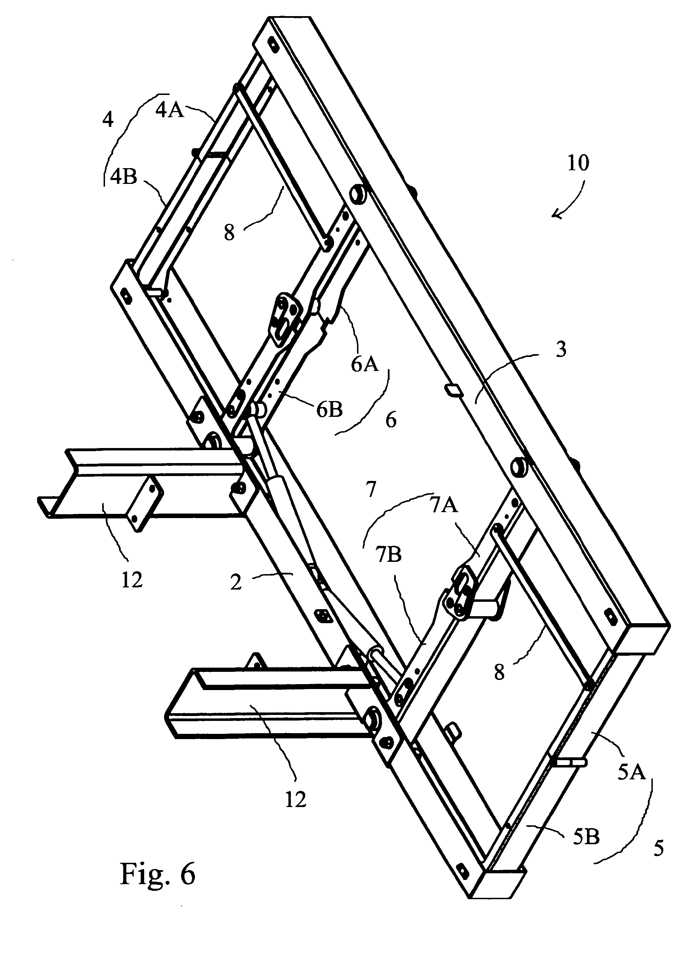

Figs. 1 to 3 are plan views of a motor vehicle provided with a fender device according to the invention in consecutive stages of the process of extending the fender device. Fig. 4 is a side elevation of the motor vehicle in the stage corresponding to Fig. 3. Fig. 5 is a perspective view of a first embodiment of a fender device according to the invention in the extended state, and Fig. 6 is a perspective view of a second embodiment of a fender device according to the invention in the extended state. The motor vehicle 100 (cf. e.g. Fig. 1) comprises a chassis 1 provided with wheels 11 and forms a container truck 100 provided with a container 30 here. Such a vehicle often has four wheels at the rear, of which only two are shown in the drawing. A fender device 10 according to the invention is fastened to the chassis 1 at the rear thereof by means of two hollow beams 12. The device 10 comprises a beam 2 and a fender beam 3 which are interconnected (cf. Fig. 2) by means of hinges 4, 5 that can hinge inwards and which are hinged to the ends of the beam 2 and the fender beam 3. The hinge points 40, 50 reach their extreme positions in the stage shown in Fig. 3, i.e. a maximum distance between the beam 2 and the fender beam 3. Fig. 4 shows the motor vehicle 100, a truck 100 in this case, in this stage in side elevation. The device 10 comprises further profiles 6, 7 which also comprise hinges and are hinged to the beam 2 and the fender beam 3. These further profiles 6, 7 are of a sturdier construction than the profiles 4, 5 and are coupled to a drive 9, a hydraulic drive here, by means of which the fender beam 3 can be automatically moved away from the beam 2. Since the fender device 10 according to the invention in the situation shown in Figs. 3 and 4 form a closed rectangle as it were, the device 10 is particularly safe and strong. The device on the one hand offers protection against (heavy) traffic impacting from the rear, especially on account of the further profiles 6, 7, and on the other hand offers protection to light traffic coming from the side, such as cyclists, motorcyclists, and pedestrians, by preventing them from entering underneath the vehicle 100 between parts thereof.

Fig. 5 is a perspective view of a first embodiment of a fender device according to the invention in the extended state. The device 10 of the preceding Figures is shown in more detail in Fig. 5. It is particularly apparent here that the profiles 4, 5 and the further profiles 6, 7 are constructed as U-beams. It is also apparent that the mutually hinging profile parts 4A, 4B to 7A, 7B reach their extreme positions in the extended state. This is achieved here in that said profile parts in the extended state lie against one another with flat side faces, while the respective hinge points 40, 50, 60, 70 are provided at an outer (visible) side of the (further) profiles 4 to 7. The further profiles 6, 7 are of a bigger and stronger construction here than the profiles 4,5 because they have to absorb the greatest forces and are also coupled to the extension mechanism in the form of hydraulic cylinders 9, which are hinged thereto.

The profiles 4, 5 and the further profiles 6, 7 are coupled to one another by coupling pieces 8 constructed as H-beams. A smooth and synchronized outward movement of the (further) profiles 4 to 7 is promoted thereby. The H-shape of the coupling pieces 8 achieves that the profile parts of the further profiles 6, 7 can be stored therein when the device 10 enters the collapsed state. The beams 12 with which the device 10 can be fastened to the chassis 1 are not shown in Fig. 5. They may be fastened to the device 10 at the locations of reinforcements 20. Locking means may be accommodated in one of the hollow (further) profiles 4 to 7 or in the (fender) beam 2 (3) for locking the (further) profiles 4 to 7 in their extreme (outermost) position. Said means may comprise, for example, a pin (not shown) that is passed through openings (also not shown) in mutually overlapping portions 25, 26 of the profile parts 6A, 6B and is retained therein by means of a split pin. The former pin itself, when not in use, may be fastened to the device by means of a clamp or a set of mating openings in or within a portion of the device 10. The locking means are particularly useful in a modification in which the fender device is folded in and out by hand. If a hydraulic drive is used for extending and collapsing, this drive itself will act as a lock after the extreme (outermost) position has been reached.

In addition to the features of the further profile parts 6, 7 mentioned above, it is pointed out here that the three hinge axes 21, 70, 21 of a further profile (cf. profile 7 in Fig. 5) do not lie in one line. The central hinge point 70 is farther removed from the center of the (fender) beam 2, 3 than the two outermost hinge axes 21. This also serves to realize that the further profile 7 in a collision from behind cannot bend through in outward direction beyond the outermost position shown in Fig. 5, even if play is present.

The fender device 10 in this example further comprises two sensors 22 which detect the positions of two marker plates 23, of which only one is visible in Fig. 5, and by means of which the two positions of the respective profile parts 6B, 7B adjoining the beam 2 can be separately detected. It is ensured thereby that it is known to the driver of the vehicle 100 whether the fender device is fully collapsed or fully extended. This may be signaled in the driver cabin of the vehicle 100 by means of an optical or acoustic signal. To achieve a satisfactory, in particular vertical alignment of the fender beam 3 relative to the beam 2 in the collapsed condition of the device 10, the present embodiment comprises a sloping guide plate 24 that is fastened to the beam 2 and along which the fender beam 3 is guided towards the lower surface of the beam 2.

Fig. 6 is a perspective view of a second embodiment of a fender device according to the invention in the extended state. The fender device 10 has essentially the same construction as in the first embodiment of Fig.5. In this second embodiment the hollow profiles 12 are shown that can advantageously be used to connect the fender device 10 to the vehicle 100 of Figs 1-4. The main difference with the previous embodiment is in the position of the coupling pieces 8 which are positioned in this embodiment between the hinge points of the various profile parts 4,5,6,7 and the outer fender 3. This construction is simple, cheap and effective.

The invention was described above with reference to preferred embodiments thereof. Those skilled in the art will appreciate that numerous modifications may be applied thereto without departing from the scope of the accompanying claims. The description should accordingly be regarded as illustrative rather than restrictive, and no limitations are to be inferred other than those stated in the claims.

Although the invention is particularly suitable for heavy motor vehicles, in particular for a container truck, it may be used to advantage also in other, lighter motor vehicles. If the vehicle is a container truck, it may be provided with a hooked arm or a cable for placing a container to be transported on the vehicle. The construction described here is suitable in principle for use with a container truck capable of transporting containers having two (standard) longitudinal sizes. Minor deviations in size of a container to be transported, for example of a few tens of centimeters with respect to the standard size, however, can be readily accommodated.

## Claims

1. A fender device (10) for a motor vehicle (100) with a chassis (1) provided with wheels and comprising a frame that has a beam (2) that can be fastened to said chassis (1) and a fender beam (3) running parallel to said beam (2) and fastened to said beam (2) by means of two profiles (4, 5), such that an end of each profile (4, 5) is hinged to the fender beam (3) and the other end of each profile (4, 5) is hinged to the beam (2), each profile (4, 5) comprising two profile parts ((4A, 4B),(5A, 5B)) that are interconnected with hinging possibility, so that the fender beam (3) is displaceable from a first position located close to the beam (2), with the profile parts ((4A, 4B),(5A, 5B)) lying against each other, and a second position farther removed from the beam (2), with the profile parts ((4A, 4B),(5A, 5B)) lying in one another's extended direction, and vice versa, **characterized in that** the profiles (4, 5) are fastened to the beam (2) and to the fender beam (3) adjacent the ends thereof, the hinging connection between the profile parts ((4A, 4B),(5A, 5B)) being shaped such that the hinge points (40, 50) of the profile parts ((4A, 4B),(5A, 5B)) can only be located between said ends in each and every relative position of the fender beam (3) with respect to the beam (2), and **in that** the frame is provided with reinforcement means (6, 7) between the ends of the beam (2) and the fender beam (3) whereby in the second position a rigid connection can be created between the beam (2) and the fender beam (3).

2. A fender device (10) as claimed in claim 1, **characterized in that** the reinforcement means (6, 7) comprise two further profiles (6, 7) of a construction similar to that of the profiles (4, 5), which further profiles (6, 7) are fastened between the ends and the centers of the beam (2) and the fender beam (3) to said beams (2, 3) in the same manner as the profiles (4, 5).

3. A fender device (10) as claimed in claim 1 or 2, **characterized in that** the profiles (4, 5) and the further profiles (6, 7) are interconnected adjacent the hinge points (40, 50, 60, 70) of their respective profile parts by means of a coupling piece (8) that is fastened with rotation possibility to the profiles (4, 5) and the further profiles (6, 7).

4. A fender device (10) as claimed in claim 3, **characterized in that** the coupling piece (8) is fastened to hinge pins (40, 50, 60, 70) between the profile parts of the profiles (4, 5) and the further profiles (6, 7).

5. A fender device (10) as claimed in claim 3, **characterized in that** the coupling piece (8) is fastened to the profile parts (4,5) and the further profiles (6,7) in a position between the hinge pins (40,50,60,70) and the fender beam (3).

6. A fender device (10) as claimed in claim 2, 3, 4, or 5, **characterized in that** the further profiles (6, 7) are connected to displacement means (9) which are accommodated in the beam (2), which can be coupled to the chassis (1), which comprise a pneumatic or hydraulic drive, and which are hinged to the further profiles (6, 7).

7. A fender device (10) as claimed in any one of the preceding claims, **characterized in that** the shape and dimensions and the materials of the profiles (4, 5) and further profiles (6, 7) are chosen such that the force-absorbing capacity of the further profiles (6, 7) is greater than that of the profiles (4, 5).

8. A fender device (10) as claimed in any one of the preceding claims, **characterized in that** the frame is provided with locking means by which the further profiles (6, 7) can be locked in the extended state.

9. A fender device (10) as claimed in any one of the preceding claims, **characterized in that** the dimensions of the frame are adapted to fit a truck or van, in particular a so-termed container truck.

10. A motor vehicle (100) provided with a fender device (10) as claimed in any one of the preceding claims.

## Patentansprüche

1. Stoßfängervorrichtung (10) für ein Kraftfahrzeug (100) mit einem Chassis (1) mit Rädern, und mit einem Rahmen, der einen Balken (2) aufweist, der an dem genannten Chassis (1) befestigt werden kann, und wobei ein Stoßbalken (3) sich parallel zu dem genannten Balken (2) erstreckt und mit Hilfe zweier Profile (4, 5) an dem genannten Balken (2) befestigt ist, so dass ein Ende jedes Profils (4, 5) gelenkig an dem Stoßbalken (3) befestigt ist und das andere Ende jedes Profils (4, 5) an dem Balken (2) gelenkig befestigt ist, wobei jedes Profil (4, 5) zwei Profilteile ((4A, 4B), (5A, 5B)) aufweist, die mit Gelenkmöglichkeiten miteinander verbunden sind, so dass der Stoßbalken (3) aus einer ersten Lage nahe beim Balken (2), wobei die Profilteile ((4A, 4B), (5A, 5 B)) gegeneinander liegen, in eine zweite Lage weiter entfernt von dem Balken (2), wobei die Profilteile ((4A, 4B), (5A, 5B)) in der verlängerten Richtung liegen, und umgekehrt, verlagert werden kann, **dadurch gekennzeichnet, dass** die Profile (4, 5) an dem Balken (2) sowie in der Nähe der Enden des Stoßbalkens (3) befestigt sind, wobei die gelenkige Verbindung zwischen den Profilteilen ((4A, 4B), (5A, 5B)) derart gestaltet ist, dass die Gelenkstellen (40, 50) der Profilteile ((4A, 4B), (5A, 5B)) nur zwischen den genannten Enden liegen können, und zwar in jeder Lage des Stoßbalkens (3) gegenüber dem Balken (2), und dass der Rahmen zwischen den Enden des Balkens (2) und des Stoßbalkens (3) mit Verstärkungsmitteln (6, 7) versehen ist, wobei in der zweiten Lage zwischen dem Balken (2) und dem Stoßbalken (3) eine starre Verbindung geschaffen werden kann.

2. Stoßfängervorrichtung (10) nach Anspruch 1, **dadurch gekennzeichnet, dass** die Verstärkungsmittel (6, 7) zwei weitere Profile (6, 7) einer Konstruktion aufweisen, die der Konstruktion der Profile (4, 5) entspricht, wobei die weiteren Profile (6, 7) zwischen den Enden und den Mitten des Balkens (2) und des Stoßbalkens (3) an den genannten Balken (2, 3) auf dieselbe Art und Weise wie die Profile (4, 5) befestigt sind.

3. Stoßfängervorrichtung (10) Bildablenkspulensystem 1 oder 2, **dadurch gekennzeichnet, dass** die Profile (4, 5) und die weiteren Profile (6, 7) in der Nähe der Gelenkstellen (40, 50, 60, 70) deren betreffender Profilteile mit Hilfe eines Kupplungsteils (8) miteinander verbunden sind, wobei dieser Kupplungsteil mit Drehmöglichkeit an den Profilen (4, 5) und den weiteren Profilen (6, 7) befestigt ist.

4. Stoßfängervorrichtung (10) nach Anspruch 3, **dadurch gekennzeichnet, dass** der Kupplungsteil (8) an Gelenkstiften (40, 50, 60, 70) zwischen den Profilteilen der Profile (4, 5) und der weiteren Profile (6, 7)

5. Stoßfängervorrichtung (10) nach Anspruch 3, **dadurch gekennzeichnet, dass** der Kupplungsteil (8) an einer Stelle zwischen den Gelenkstiften (40, 50, 60, 70) und dem Stoßbalken (3) an den Profilteilen (4, 5) und an den weiteren Profilteilen (6, 7) befestigt ist.

6. Stoßfängervorrichtung (10) nach Anspruch 2, 3, 4 oder 5, **dadurch gekennzeichnet, dass** die weiteren Profile (6, 7) mit Verlagerungsmitteln (9) verbunden sind, die in dem Balken (2) untergebracht sind, der mit dem Chassis (1) gekuppelt werden kann, die eine pneumatische oder hydraulische Antriebsvorrichtung aufweisen, und die gegenüber den weiteren Profilen (6, 7) gelenkig sind.

7. Stoßfängervorrichtung (10) nach einem der vorstehenden Ansprüche, **dadurch gekennzeichnet, dass** die Form und die Abmessungen sowie das Material der Profile (4, 5) und der weiteren Profile (6, 7) derart gewählt worden sind, dass die kraftabsorbierende Kapazität der weiteren Profile (6, 7) größer ist als die der Profile (4, 5).

8. Stoßfängervorrichtung (10) nach einem der vorstehenden Ansprüche, **dadurch gekennzeichnet, dass** der Rahmen mit Verriegelungsmitteln versehen ist, mit denen die weiteren Profile (6, 7) in dem verlängerten Zustand verriegelt werden können.

9. Stoßfängervorrichtung (10) nach einem der vorstehenden Ansprüche, **dadurch gekennzeichnet, dass** die Größe des Rahmens derart ist, dass dieser für einen Lastkraftwagen, insbesondere für einen sog. Containerfahrzeug, passt.

10. Kraftfahrzeug (100) mit einer Stoßfängervorrichtung (10) nach einem der vorstehenden Ansprüche.

## Revendications

1. Dispositif d'amortisseur (10) pour un véhicule à moteur (100) avec un châssis (1) muni de roues et comprenant un cadre qui a une poutre (2) qui peut être fixée sur ledit châssis (1) et une poutre d'amortisseur (3) s'étendant parallèlement à ladite poutre (2) et fixée à ladite poutre (2) au moyen de deux profils (4, 5), de sorte qu'une extrémité de chaque profil (4, 5) est jointe en charnière à la poutre d'amortisseur (3) et l'autre extrémité de chaque profil (4, 5) est jointe en charnière à la poutre (2), chaque profil (4, 5) comprenant deux parties de profil ((4A, 4B), (5A, 5B)) qui sont interconnectées avec la possibilité de jointure en charnière, de sorte que la poutre d'amortisseur (3) est déplaçable d'une première position située à proximité de la poutre (2), avec les parties de profil ((4A, 4B), (5A, 5B)) qui reposent l'une contre l'autre, et une deuxième position plus éloignée de la poutre (2), avec les parties de profil ((4A, 4B), (5A, 5B)) qui reposent dans la direction étendue l'une de l'autre, et vice versa, **caractérisé en ce que** les profils (4, 5) sont fixés à la poutre (2) et à la poutre d'amortisseur (3) adjacentes aux extrémités de ceux-ci, la jointure en charnière entre les parties de profil ((4A, 4B), (5A, 5B)) étant de formes telles que les points de charnière (40, 50) des parties de profil ((4A, 4B), (5A, 5B)) ne peuvent être situés qu'entre lesdites extrémités à chaque position relative de la poutre d'amortisseur (3) par rapport à la poutre (2), et **en ce que** le cadre est muni de moyens de renforts (6, 7) entre les extrémités de la poutre (2) et de la poutre d'amortisseur (3) moyennant quoi à la deuxième position une connexion rigide peut être créée entre la poutre (2) et la poutre d'amortisseur (3).

2. Dispositif d'amortisseur (10) selon la revendication 1, **caractérisé en ce que** les moyens de renfort (6, 7) comprennent deux autres profils (6, 7) d'une construction similaire à celle des profils (4, 5), les autres profils (6, 7) étant fixés entre les extrémités et les centres de la poutre (2) et de la poutre d'amortisseur (3) sur lesdites poutres (2, 3) de la même manière que les profils (4, 5).

3. Dispositif d'amortisseur (10) selon la revendication 1 ou 2, **caractérisé en ce que** les profils (4, 5) et les autres profils (6, 7) sont interconnectés de manière adjacente aux points de charnière (40, 50, 60, 70) de leurs parties de profil respectives au moyen d'une pièce d'accouplement (8) qui est fixée avec possibilité de rotation sur les profils (4, 5) et les autres profils (6, 7).

4. Dispositif d'amortisseur (10) selon la revendication 3, **caractérisé en ce que** la pièce d'accouplement (8) est fixée sur des broches de charnière (40, 50, 60, 70) entre les parties de profil des profils (4, 5) et des autres profils (6, 7).

5. Dispositif d'amortisseur (10) selon la revendication 3, **caractérisé en ce que** la pièce d'accouplement (8) est fixée aux parties de profil (4, 5) et aux autres profils (6, 7) à une position entre les broches de charnière (40, 50, 60, 70) et la poutre d'amortisseur (3).

6. Dispositif d'amortisseur (10) selon la revendication 2, 3, 4 ou 5, **caractérisé en ce que** les autres profils (6, 7) sont connectés à des moyens de déplacement (9) qui sont pris en charge dans la poutre (2), qui peuvent être couplés au châssis (1), qui comprennent un entraînement pneumatique ou hydraulique, et qui sont joints en charnière aux autres profils (6, 7).

7. Dispositif d'amortisseur (10) selon l'une quelconque des revendications précédentes, **caractérisé en ce que** la forme, les dimensions et les matériaux des profils (4, 5) et des autres profils (6, 7) sont choisis de sorte que la capacité d'absorption de force des autres profils (6, 7) est supérieure à celle des profils (4, 5).

8. Dispositif d'amortisseur (10) selon l'une quelconque des revendications précédentes, **caractérisé en ce que** le cadre est muni de moyens de verrouillage par lesquels les autres profils (6, 7) peuvent être verrouillés dans l'état étendu.

9. Dispositif d'amortisseur (10) selon l'une quelconque des revendications précédentes, **caractérisé en ce que** les dimensions du cadre sont adaptées pour correspondre à un camion ou à une camionnette, en particulier ce que l'on appelle un camion de conteneurs.

10. Véhicule à moteur (100) muni d'un dispositif d'amortisseur (10) selon l'une quelconque des revendications précédentes.
